# EUROPÄISCHE PATENTSCHRIFT

(11) **EP 1 360 428 B1**
(45) Veröffentlichungstag und Bekanntmachung des Hinweises auf die Patenterteilung: **27.07.2005**
(21) Anmeldenummer: 02711853.8
(22) Anmeldetag: 08.02.2002
(51) Int. Cl.: F16D 55/226, B23Q 3/18, B25B 5/06

(54) **SPANLOS GEFORMTER BREMSSATTEL UND VERFAHREN ZUR HERSTELLUNG**
NON-CUTTING SHAPED BRAKE CALIPER AND METHOD FOR THE PRODUCTION THEREOF
ETRIER DE FREIN FORME SANS ENLEVEMENT DE COPEAUX ET PROCEDE DE PRODUCTION DE CET ETRIER

(30) Priorität: 13.02.2001 DE 10106591
(43) Veröffentlichungstag der Anmeldung: 12.11.2003
(73) Patentinhaber: Lucas Automotive GmbH, 56070 Koblenz (DE); TRW Systemes de Freinage S.A.S., 57320 Bouzonville (FR)
(72) Erfinder: GOEBEL, René, F-57320 Schwerdorff (FR); MAIWURM, Jean, Jacques, F-57150 Creutzwald (FR); EHL, Karl, 56203 Höhr-Grenzhausen (DE); HUGUET, Eric, F-77183 Croissy Beaubourg (FR); KLUMP, Berthold, 56379 Singhofen (DE); KREMER, Joachim, 56291 Emmelshausen (DE); LEWENZ, Rainer, 56341 Kamp-Bornhofen (DE); STRAUB, René, F-57220 Holling (FR); WOJCIK, Magda, 56761 Brachtendorf (DE); WALDEN, Christoph, 56179 Vallendar (DE); WALDEN, Michael, 56626 Andernach (DE)
(74) Vertreter: Goetz, Rupert, Dipl.-Ing.
(86) Internationale Anmeldenummer: PCT/EP2002/001341
(87) Internationale Veröffentlichungsnummer: WO 2002/064991

(56) Entgegenhaltungen:
- EP-A- 1 096 167
- DE-A- 19 739 122
- DE-C- 19 542 425

## Beschreibung

Die Erfindung betrifft ein Verfahren zum spanlosen Formen eines Bremssattels für eine Teilbelag-Scheibenbremse, in der er im Anschluss an eine spanende Nachbearbeitung einen Schwimmsattel bildet, mit einem Bremskrafterzeuger und einem ihm gegenüberliegenden Widerlager,
- wobei zum spanlosen Formen mindestens zwei den Bremssattel je teilweise aufnehmende Formteile verwendet werden, in denen zur Vorbereitung auf die spanende Nachbearbeitung am Bremssattel Auflageflächen sowie Angriffsflächen ausgebildet werden,
- wobei der Bremssattel für die spanende Nachbearbeitung mit seinen Auflageflächen definiert abstützbar und durch an seinen Angriffsflächen angreifende Spannkräfte festspannbar ist.
   Die Erfindung betrifft ferner einen spanlos geformten Bremssattel für eine Teilbelag-Scheibenbremse, in der er im Anschluss an eine spanende Nachbearbeitung einen Schwimmsattel bildet, mit
- einem Bremskrafterzeuger in Form eines Zylinders, der eine Zylinderachse definiert und einen Zylinderboden aufweist,
- einem dem Bremskrafterzeuger gegenüberliegenden Widerlager,
- mindestens einem Paar Führungskörper, die auf je einer Seite des Zylinders ausgebildet sind, und an denen sich je eine Führung mit zur Zylinderachse paralleler Führungsachse ausbilden lässt,
- einer Brücke, die den Bremskrafterzeuger mit dem Widerlager verbindet und eine der Zylinderachse zugewandte Innenseite hat,
- und mit am Bremssattel ausgebildeten Auflageflächen und Angriffsflächen, die ein definiertes Abstützen und Festspannen des Bremssattels für die spanende Nachbearbeitung ermöglichen.

Aus der DE 195 42 425 C1 ist es bekannt, einen gegossenen oder geschmiedeten Rohling eines Bremssattels, der als Schwimmsattel einer Teilbelag-Scheibenbremse vorgesehen ist, beim Gießen oder Schmieden mit drei definierten Auflageflachen zu versehen, die dann für ein spanendes Nachbearbeiten auf je eine Stützfläche einer Spannvorrichtung aufgelegt werden, woraufhin der Bremssattel mit Spannkräften belastet wird, die ihn daran hindern, sich auf den Stützflächen zu verschieben. Die drei Auflageflächen sind sämtlich in einem Rückenbereich des Bremssattels ausgebildet, der bezogen auf die Anordnung des Bremssattels als Bestandteil einer Scheibenbremse radial außen liegt, also von der Bremsscheibe abgewandt ist. Die zum Festspannen des Bremssattels auf den Stützflächen erforderlichen Spannkräfte werden, bezogen auf die Anordnung des Bremssattels in der fertigen Scheibenbremse, radial von innen nach außen wirkend aufgebracht. Damit wird eine definierte und im wesentlichen gleichbleibend genaue Aufspannung von gegossenen oder geschmiedeten Bremssätteln erleichtert, wobei deren spanend zu bearbeitende Flächen gut zugänglich sind.

Der Erfindung liegt die Aufgabe zugrunde, ein Verfahren und einen Bremssattel der eingangs beschriebenen Gattung derart weiterzubilden, dass bei gegebenen Genauigkeitsanforderungen an den fertigen Bremssattel eine spanende Nachbearbeitung des spanlos geformten Bremssattels nur noch in geringerem Umfang als bisher erforderlich ist.

Soweit sie das Verfahren betrifft, ist die Aufgabe erfindungsgemäß dadurch gelöst, dass beim spanlosen Formen das Widerlager und die Auflageflächen des Bremssattels in einem und dem selben Formteil ausgebildet werden.

Das erfindungsgemäße Verfahren eignet sich besonders zum spanlosen Formen eines Bremssattels mit
- einem Bremskrafterzeuger in Form eines Zylinders, der eine Zylinderachse definiert und einen Zylinderboden aufweist,
- mindestens einem Paar Führungskörper, die auf je einer Seite des Zylinders ausgebildet sind, und an denen sich je eine Führung mit zur Zylinderachse paralleler Führungsachse ausbilden lässt, und
- einer Brücke, die den Bremskrafterzeuger mit dem Widerlager verbindet und eine der Zylinderachse zugewandte Innenseite hat.

Beim spanlosen Formen eines solchen Bremssattels ist es zweckmäßig, wenn
- eine erste und eine zweite Auflagefläche an der Innenseite der Brücke in gleichen Abständen von der Zylinderachse, je einer der beiden Führungsachsen benachbart, nahe dem Widerlager ausgebildet werden, und
- eine dritte Auflagefläche in einem von der Brücke abgewandten Randbereich des Zylinderbodens so ausgebildet wird, dass sie in bezug auf eine Mittelebene zentriert ist, welche die Zylinderachse enthält und sich normal zu einer Führungsebene erstreckt, in der die beiden Führungsachsen liegen.

Dabei ist es ferner vorteilhaft, wenn zum spanlosen Formen des Bremssattels
- zwei Formteile verwendet werden, die sich längs einer Formenachse zusammensetzen und auseinanderbewegen lassen und in zusammengesetztem Zustand in einer Trennfläche aneinanderliegen, von der mindestens ein an den Bremssattel angrenzender Bereich mit der Formenachse einen Winkel von weniger als 90° einschließt, und
- die Führungsebene sowie die Zylinderachse gegen eine zur Formenachse normale Ebene unter einem spitzen Neigungswinkel geneigt sind.

Außerdem ist es zweckmäßig, wenn beim spanlosen Formen des Bremssattels eine dem Widerlager zugewandte, von ihm mit zunehmender Entfernung von der Brücke divergierende Stirnfläche am Bremskrafterzeuger ausgebildet wird, die mit einer zur Zylinderachse normalen Ebene einen Winkel einschließt, welcher größer als der Neigungswinkel ist.

Beim spanlosen Formen des Bremssattels wird vorzugsweise eine dem Bremskrafterzeuger zugewandte Stirnfläche am Widerlager ausgebildet, die mit der Formenachse einen Schrägungswinkel einschließt, der zwar zum beschädigungsfreien Ausformen ausreicht, jedoch kleiner als der Neigungswinkel ist.

Schließlich werden am Bremssattel beim spanlosen Formen zweckmäßigerweise
- je eine zur Zylinderachse normale vierte bzw. fünfte Auflagefläche ausgebildet, und
- die erste, zweite und dritte Auflagefläche so ausgebildet, dass sie sich einer Verschiebung des Bremssattels in einer zur Zylinderachse parallelen Richtung beim Einspannen für das spanende Nacharbeiten nicht widersetzen.

Soweit die beschriebene Aufgabe einen Bremssattel als solchen betrifft, ist sie ausgehend von einem Bremssattel der eingangs beschriebenen Gattung erfindungsgemäß dadurch gelöst, dass
- eine erste und eine zweite Auflagefläche an der Innenseite der Brücke in gleichen Abständen von der Zylinderachse, je einer der beiden Führungsachsen benachbart, nahe dem Widerlager ausgebildet sind, und
- eine dritte Auflagefläche in einem von der Brücke abgewandten Randbereich des Zylinderbodens in bezug auf eine Mittelebene zentriert ist, welche die Zylinderachse enthält und sich normal zu einer Führungsebene erstreckt, in der die beiden Führungsachsen liegen.

Der spanlos geformte Bremssattel nach der Erfindung ist vorzugsweise dadurch weitergebildet, dass eine dem Widerlager zugewandte, von ihm mit zunehmender Entfernung von der Brücke divergierende Stirnfläche am Bremskrafterzeuger spanlos ausgebildet ist, die mit einer zur Zylinderachse normalen Ebene einen Winkel einschließt, welcher größer als der Neigungswinkel ist.

Schließlich ist es zweckmäßig wenn der Bremssattel
- je eine zur Zylinderachse normale vierte bzw. fünfte Auflagefläche aufweist, und
- die erste, zweite und dritte Auflagefläche sich parallel zur Zylinderachse erstrecken.

Der vorausgesetzte Stand der Technik sowie zwei Ausführungsbeispiele der Erfindung werden im folgenden anhand schematischer Zeichnungen näher erläutert:
- Fig.1: ist ein senkrechter Schnitt einer nach dem Stand der Technik zum Gießen eines Bremssattels verwendeten zweiteilige Form, wobei der Bremssattel in Seitenansicht dargestellt ist;
- Fig.2: ist eine Ansicht des in bekannter Weise gegossenen, aus seiner Gießform entnommenen und zum spanenden Nachbearbeiten um 180° gewendeten Bremssattels;
- Fig.3: ist ein senkrechter Schnitt einer nach der Erfindung zum Gießen eines Bremssattels verwendeten Gießform, wobei dieser Bremssattel wiederum in Seitenansicht dargestellt ist;
- Fig.4: ist die Draufsicht des in Fig.3 dargestellten, jedoch aus seiner Gießform entnommenen Bremssattels in einer zum spanenden Nachbearbeiten geeigneten Stellung;
- Fig.5: ist die teilweise als Querschnitt dargestellte Ansicht in Richtung der Pfeile V in Fig.4;
- Fig.6: ist ein der Fig.1 entsprechender Schnitt einer nach dem Stand der Technik zum Gießen eines teilweise anders gestalteten Bremssattels verwendeten Form, wobei dieser Bremssattel in Seitenansicht dargestellt ist; und
- Fig.7: ist ein senkrechter Schnitt einer nach der Erfindung zum Gießen eines Bremssattels verwendeten Gießform, wobei dieser Bremssattel in seiner Gestaltung dem in Fig. 6 dargestellten entspricht.

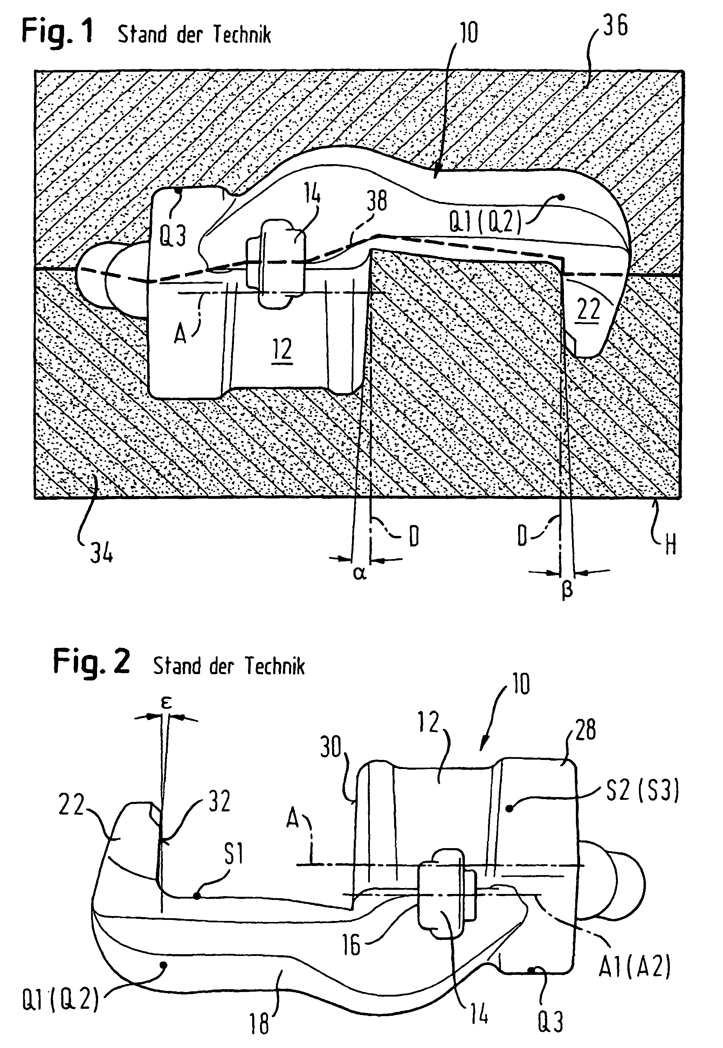

In Fig.1 und 2 ist ein Bremssattel 10 dargestellt, der als Schwimmsattel für Scheibenbremsen millionenfach bewährt ist.

Er ist ein einteiliges Gußstück aus Kugelgraphitguß, könnte aber auch ein Spritzgußteil aus Aluminium oder ein Schmiedeteil sein. Der Bremssattel 10 hat einen Bremskrafterzeuger 12 in Form eines hydraulischen Zylinders mit der Zylinderachse A, von dem zwei einander nahezu diametral gegenüberliegende, im folgenden als Führungskörper 14 bezeichnete Arme im wesentlichen rechtwinklig zur Zylinderachse A wegragen. Den beiden Führungskörpern 14 ist am fertigen Bremssattel 10 je eine Führung 16 zugeordnet, deren im folgenden als Führungsachse A1 bzw. A2 bezeichnete Achse sich parallel zur Zylinderachse A erstreckt, so dass sie im Betrieb der Bremse eine Verschiebung des Bremssattels 10 in Richtung der Zylinderachse A ermöglicht.

Zum Herstellen der Führungen 16 werden die beiden Arme 14 beim Fertigbearbeiten des Bremssattels 10 mit je einer entsprechenden Bohrung versehen. An diesen Bohrungen wird je ein zylindrischer Führungsbolzen derart befestigt, dass seine Achse mit der zugehörigen Führungsachse A1 bzw. A2 übereinstimmt. Die Führungsachsen A1 und A2 sind durch Führungsbohrungen in einem Bremsträger definiert, in denen je einer der genannten Führungsbolzen axial verschiebbar geführt ist. Eine derartige Führung eines Schwimmsattels einer Scheibenbremse ist beispielsweise aus DE 20 43 652 C3 und DE 26 38 508 B2 bekannt, sodass sie im Zusammenhang mit der vorliegenden Erfindung nicht dargestellt zu werden braucht. Es ist auch eine kinematische Umkehrung möglich, bei der am Schwimmsattel Führungsbohrungen ausgebildet sind, die auf je einem am zugehörigen Bremsträger befestigten Führungsbolzen axial verschiebbar sind; dies ist aus DE 22 11 453 C3 bekannt.

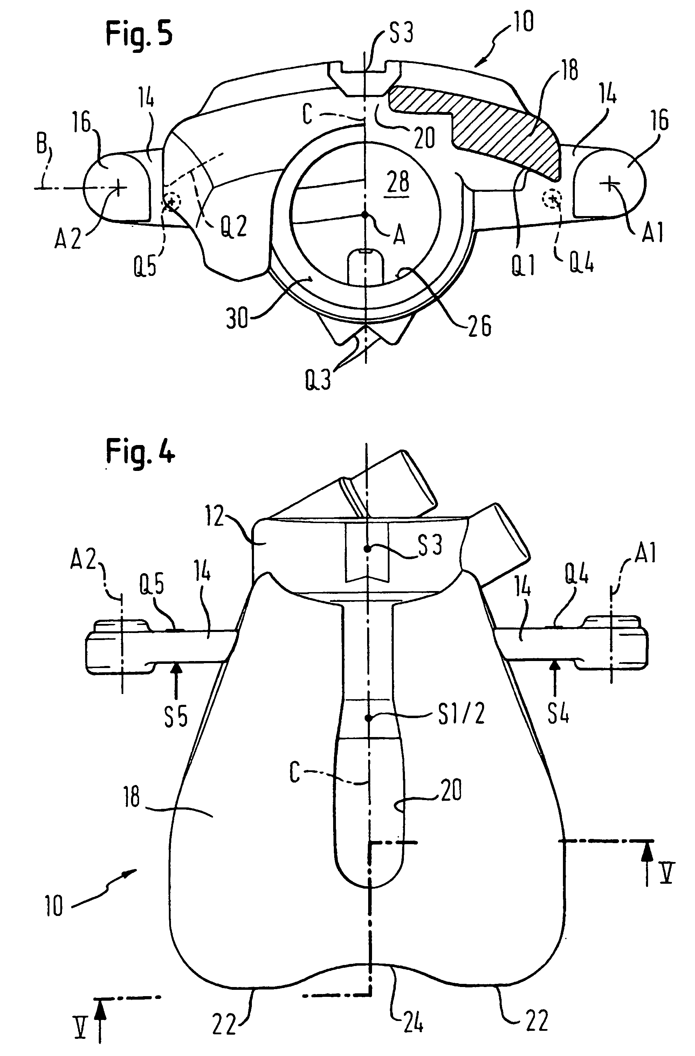

In der Nähe der beiden Führungskörper 14 setzt am Bremskrafterzeuger 12 eine Brücke 18 an, die sich im wesentlichen parallel zur Zylinderachse A zwischen den beiden Führungsachsen A1 und A2 erstreckt, eine langgestreckte Brückenöffnung 20 aufweist (siehe Fig.4 und 5) und ein Widerlager 22 trägt. Das Widerlager 22 erstreckt sich im wesentlichen rechtwinklig zur Zylinderachse A und ist durch eine Aussparung 24 in zwei fingerartige Hälften unterteilt. Durch die Aussparung 24 hindurch lassen sich für das spanende Nachbearbeiten Bohr-, Dreh- und Fräswerkzeuge zum Bremskrafterzeuger 12 bewegen, um dort eine Zylinderwand 26, einen Zylinderboden 28 sowie eine Stirnfläche 30 oder Teile davon zu bearbeiten, wobei unter anderem ringförmige Nuten für Dichtungsringe und -manschetten in bekannter Weise eingearbeitet werden können.

Der Stirnfläche 30 des Bremskrafterzeugers 12 steht eine am Widerlager 22 ausgebildete Stirnfläche 32 gegenüber, die bei dem in Fig.1 und 2 dargestellten bekannten Bremssattel 10 ebenfalls eine spanende Bearbeitung nach dem Gießen oder Schmieden erfordert. Dieses Erfordernis ergibt sich daraus, dass gemäß Fig.1 die Zylinderachse A sowie die beiden Führungsachsen A1 und A2, und somit auch die im folgenden als Führungsebene B bezeichnete gemeinsame Ebene der beiden Führungsachsen normal, also im rechten Winkel, zu der im folgenden als Formenachse D bezeichneten Richtung angeordnet sind, in der die in Fig.1 stark vereinfacht dargestellten, die Gießform ergebenden Formteile 34 und 36 zum Schließen und Öffnen der Gießform zueinander hin bzw. voneinander weg bewegt werden:

Im geschlossenen Zustand der Gießform berühren sich die beiden Formteile 34 und 36 in einer Trennfläche 38, die gemäß dem in Fig.1 dargestellten Stand der Technik im wesentlichen parallel zu einer horizontalen Fläche H angeordnet ist, auf der das untere Formteil 34 ruht. Damit ein beim Sandgießen verwendetes, den Bremssattel 10 darstellendes Modell beschädigungsfrei entnommen werden kann, und damit das Gleiche auch für den Bremssattel selbst gilt, wenn die Formteile 34 und 36 Bestandteile einer Kokille sind, ist es erforderlich, dass die beiden Stirnflächen 30 und 32 unter je einem Schrägungswinkel α bzw. β in bezug auf die Formenachse D angeordnet sind, wobei diese beiden Winkel gleich groß sein können und in jedem Fall so angeordnet sind, dass die beiden Stirnflächen 30 und 32 in Richtung von der Brücke 18 weg divergieren, ihr Abstand voneinander also größer wird.

Ungeachtet des Schrägungswinkels α braucht die Stirnfläche 30 des Bremskrafterzeugers 12 nur insoweit spanend nachbearbeitet zu werden, wie dies zum Anbringen einer Dichtungsmanschette oder dgl. erforderlich ist. Die Stirnfläche 32 des Widerlagers 22 erfordert hingegen bei dem bekannten Bremssattel üblicherweise eine spanende Nachbearbeitung, da es wünschenswert ist, dass das Widerlager 22 im wesentlichen nur mit einem in Fig.1 unteren, in Fig.2 oberen Randbereich seiner Stirnfläche 32 auf eine sich am Widerlager abstützende Bremsbacke einwirkt, damit diese sich im Betrieb gleichmäßig abnutzt. Deshalb hat man es bisher für erforderlich gehalten, die Stirnfläche 32 des Widerlagers 22 unter einem im Vergleich mit dem Schrägungswinkel β negativen Winkel ε, wie in Fig.2 dargestellt, spanend nachzubearbeiten.

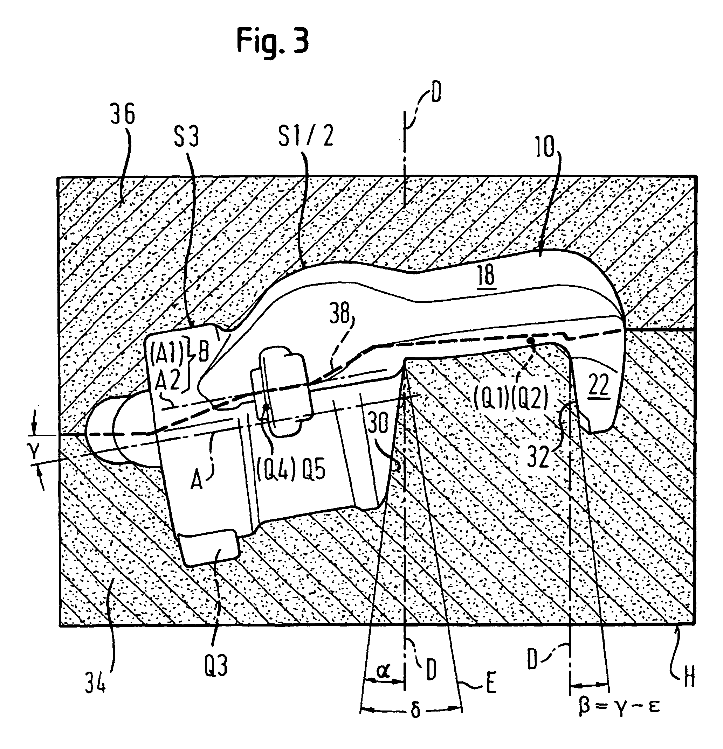

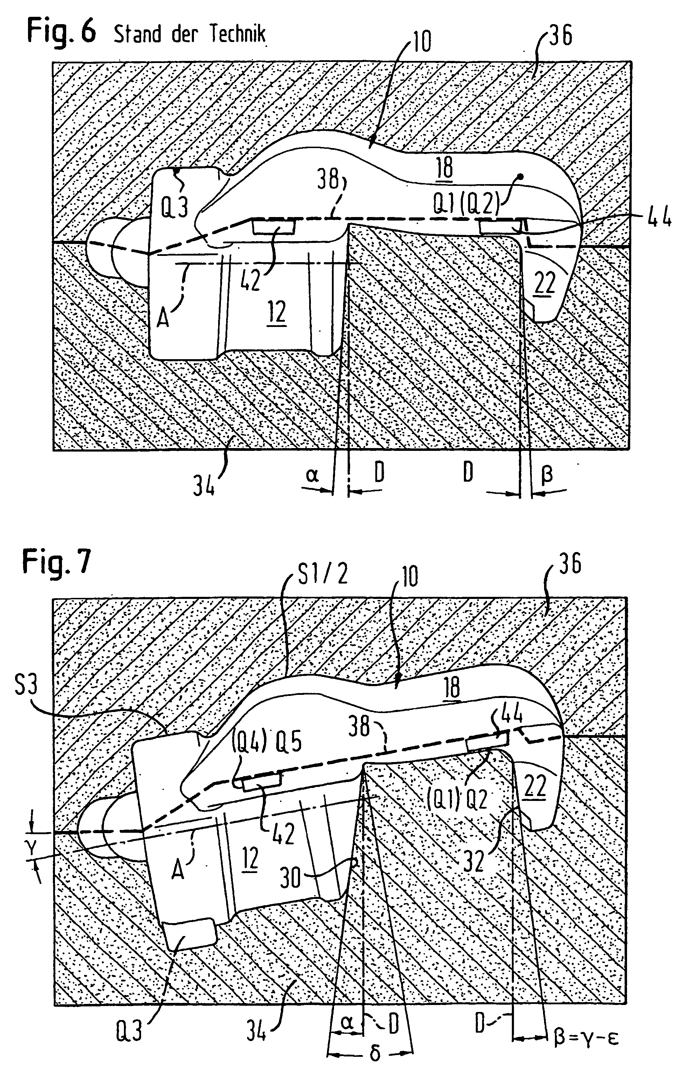

Die Notwendigkeit einer solchen Nachbearbeitung wird mit den in Fig.3 bis 5 sowie in Fig. 7 dargestellten erfindungsgemäßen Maßnahmen vermieden:

Um den Unterschied der erfindungsgemäßen Vorgehensweise gegenüber dem vorausgesetzten Stand der Technik zu verdeutlichen, sei zunächst ein Mangel beschrieben, der als Folge der in Fig.1 und in Fig. 6 dargestellten bekannten Vorgehensweise erkannt worden ist. Dabei werden Auflageflächen Q1, Q2 und Q3 für das spätere definierte Auflegen des Bremssattels 10 auf eine Spannvorrichtung zum spanenden Nachbearbeiten sämtlich im oberen Formteil 36 ausgebildet, während sämtliche Flächen, die beim fertigen Bremssattel einander verhältnismäßig maßgenau zugeordnet sein müssen, beim Gießen oder Schmieden des Bremssattels im unteren Formteil 34 entstehen. Diesem gegenüber ist aber das obere Formteil 36 möglicherweise nicht genau genug positioniert.

Davon wird gemäß Fig.3 bis 5 und Fig. 7 abgegangen. Die wesentlichen spanend nachzubearbeitenden Flächen entstehen gemäß Fig.3 ebenso wie bei der in Fig.1 und in Fig. 6 dargestellten bekannten Vorgehensweise im unteren Formteil 34. Spanend nachzubearbeiten sind unter anderem die Zylinderwand 26, der Zylinderboden 28 und die Stirnfläche 30 des Bremskrafterzeugers 12 sowie - nach bisherigen Vorstellungen - auch die Stirnfläche 32 des Widerlagers 22. Gemäß Fig.3 bis 5 und Fig. 7 sind nun aber die Auflageflächen Q1, Q2 und Q3, mit denen sich der Bremssattel 12 für seine spanende Nachbearbeitung an einer Spannvorrichtung definiert abzustützen hat, sämtlich ebenfalls im unteren Formteil 34 entstanden, also - allgemeiner ausgedrückt.- in dem selben Formteil, in dem auch das Widerlager 22 samt seiner Stirnfläche 32 bei der spanlosen Formgebung des Bremssattels 10 entstanden ist. Im anderen, gemäß Fig.3 und Fig. 7 oberen Formteil 36 werden hingegen bei der spanlosen Formgebung Angriffsflächen S1 und S3 ausgebildet, auf die beim Einspannen des gegossenen oder geschmiedeten Bremssattels 10 senkrechte Spannkräfte einwirken, wobei es nicht darauf ankommt, dass diese Spannflächen den spanend nachzubearbeitenden Flächen des Bremssattels 10 maßlich besonders genau zugeordnet sind.

Die Auflageflächen Q1 und Q2 sind gemäß Fig.3 bis 5 und Fig. 7 an der in bezug auf den betriebsbereit montierten Bremssattel 10 radial inneren Seite der Brücke 18 ausgebildet, in der Nähe je einer der beiden Führungsachsen A1 bzw. A2. Diese beiden Auflageflächen Q1 und Q2 liegen in je einer zu den Führungsachsen A1 und A2 - und somit auch zur Zylinderachse A - parallelen Ebene, so dass sie eine Justierung des Bremssattels 10 in Richtung dieser Achsen nicht behindern. Die dritte Auflagefläche Q3 ist in der Art einer Prismenführung von zwei winklig zueinander angeordneten Flächen gebildet, die beide ebenfalls parallel zu den Achsen A, A1 und A2 angeordnet sind, so dass auch die Auflagefläche Q3 eine Verschiebung des Bremssattels 10 längs dieser Achsen ermöglicht, dabei jedoch eine Verschiebung in Richtung quer zu diesen Achsen verhindert.

Für eine definierte axiale Positionierung des Bremssättels 10 in einer für spanendes Nachbearbeiten vorgesehenen Spannvorrichtung ist bei dem in Fig. 3 bis 5 dargestellten Ausführungsbeispiel an den beiden Führungskörpern 14 des Bremssattels eine vierte Auflagefläche Q4 bzw. eine fünfte Auflagefläche Q5 ausgebildet; diese beiden Auflageflächen erstrecken sich in einer gemeinsamen, zu den Achsen A, A1 und A2 normalen Ebene. An der von diesen Auflageflächen Q4 und Q5 abgewandten Seite des betreffenden Führungskörpers 14 ist eine Angriffsfläche S4 bzw. S5 für eine den Bremssattel 10 in Richtung der Achsen A1 und A2 belastende Spannkraft ausgebildet, wobei es wiederum auf maßlich genaue Anordnung dieser Angriffsflächen S4 und S5 nicht ankommt. Wichtig ist, dass die Angriffsflächen S4 und S5 sich ebenso wie die Auflageflächen Q4 und Q5 normal zu den Achsen A, A1 und A2 erstrecken und somit den Bremssattel 10 nicht daran hindern, sich unter dem Einfluss von Spannkräften, die an den Angriffsflächen S1/2 und S3 angreifen, mit seinen Auflageflächen Q1, Q2 und Q3 auf vorbestimmten Stellen der für die spanende Bearbeitung vorgesehenen Spannvorrichtung zu positionieren.

Der Bremssattel 10 liegt gemäß Fig.3 und Fig. 7 unter einem Neigungswinkel γ gegen die Horizontale H geneigt in der Gießform 34, 36. Die Stirnfläche 30 des Bremskrafterzeugers 12 ist um den Schrägungswinkel α gegen die senkrechte Formenachse D, und um den Winkel δ gegen die Zylinderachse A geneigt; dabei ist δ = α + γ. Die Stirnfläche 32 des Widerlagers 22 ist um den Schrägungswinkel β gegen die Formenachse D von der Stirnfläche 30 weg geneigt; dabei ist β = γ - ε. Der Winkel ε hat die gleiche Bedeutung und Größe wie bei dem in Fig. 1 und 2 dargestellten bekannten Bremssattel 10.

Der in Fig. 7 dargestellte, abgewandelte Bremssattel 10 hat ein erstes Paar Führungskörper 42, die auf je einer Seite des Bremskrafterzeugers 12 angeordnet sind, sowie ein zweites Paar Führungskörper 44, die auf je einer Seite der Brücke 18 nahe dem Widerlager 22 angeordnet sind. Diese Führungskörper 42 und 44 sind verhältnismäßig kleine seitliche Vorsprünge von rechteckigem Profil, die dazu bestimmt sind, bei einer fertigen Scheibenbremse in Nuten des zugehörigen Bremsträgers parallel zur Zylinderachse A verschiebbar geführt zu werden.

## Patentansprüche

1. Verfahren zum spanlosen Formen eines Bremssattel-Rohlings (10) für eine Teilbelag-Scheibenbremse, in welcher der Bremssattel im Anschluss an eine spanende Nachbearbeitung einen Schwimmsattel bildet, mit
- einem Bremskrafterzeuger (12) in Form eines Zylinders, der eine Zylinderachse (A) definiert und einen Zylinderboden (28) aufweist,
- einem dem Bremskrafterzeuger (12) gegenüberliegenden Widerlager (22),
- mindestens einem Paar Führungskörper (14; 42, 44), die auf je einer Seite des Zylinders ausgebildet sind, und an denen sich je eine Führung (16) mit zur Zylinderachse (A) paralleler Führungsachse (A1, A2) ausbilden lässt, und
- einer Brücke (18), die den Bremskrafterzeuger (12) mit dem Widerlager (22) verbindet und eine der Zylinderachse (A) zugewandte Innenseite hat,
- wobei zum spanlosen Formen mindestens zwei den Bremssattel-Rohling (10) je teilweise formende Formteile (34, 36) verwendet werden, in denen zur Vorbereitung auf die spanende Nachbearbeitung am Bremssattel-Rohling (10) Auflageflächen (Q1, Q2, Q3, Q4, Q5) sowie Angriffsflächen (S1/2, S3, S4, S5) ausgebildet werden,
- wobei der Bremssattel-Rohling (10) für die spanende Nachbearbeitung mit seinen Auflageflächen (Q1, Q2, Q3, Q4, Q5) definiert abstützbar und durch an seinen Angriffsflächen (S1/2, S3, S4, S5) angreifende Spannkräfte festspannbar ist,
**dadurch gekennzeichnet, dass** beim spanlosen Formen des Bremssattel-Rohlings (10)
- das Widerlager (22) und die Auflageflächen (Q1, Q2, Q3, Q4, Q5) des Bremssattel-Rohlings (10) in einem und dem selben Formteil (34) ausgebildet werden,
- eine erste und eine zweite Auflagefläche (Q1, Q2) an der Innenseite der Brücke (18) in gleichen Abständen von der Zylinderachse (A), je einer der beiden Führungsachsen (A1, A2) benachbart, nahe dem Widerlager (22) ausgebildet werden, und
- eine dritte Auflagefläche (Q3) in einem von der Brücke (18) abgewandten Randbereich des Zylinderbodens (28) so ausgebildet wird, dass sie in bezug auf eine Mittelebene (C) zentriert ist, welche die Zylinderachse (A) enthält und sich normal zu einer Führungsebene (B) erstreckt, in der die beiden Führungsachsen (A1, A2) liegen.

2. Verfahren nach Anspruch 1,
**dadurch gekennzeichnet, dass** zum spanlosen Formen des Bremssattel-Rohlings (10)
- zwei Formteile (34, 36) verwendet werden, die sich längs einer Formenachse (D) zusammensetzen und auseinanderbewegen lassen und in zusammengesetztem Zustand in einer Trennfläche (38) aneinanderliegen, von der mindestens ein an den Bremssattel-Rohling (10) angrenzender Bereich mit der Formenachse (D) einen Winkel von weniger als 90° einschließt, und
- die Führungsebene (B) sowie die Zylinderachse (A) gegen eine zur Formenachse (D) normale Ebene (H) unter einem spitzen Neigungswinkel (γ) geneigt sind.

3. Verfahren nach Anspruch 2,
**dadurch gekennzeichnet, dass** beim spanlosen Formen des Bremssattel-Rohlings (10) eine dem Widerlager (22) zugewandte, von ihm mit zunehmender Entfernung von der Brücke (18) divergierende Stirnfläche (30) am Bremskrafterzeuger (12) ausgebildet wird, die mit einer zur Zylinderachse (A) normalen Ebene (E) einen Winkel (δ) einschließt, welcher größer als der Neigungswinkel (γ) ist.

4. Verfahren nach Anspruch 2 oder 3,
**dadurch gekennzeichnet, dass** beim spanlosen Formen des Bremssattel-Rohlings (10) eine dem Bremskrafterzeuger (12) zugewandte Stirnfläche (32) am Widerlager (22) ausgebildet wird, die mit der Formenachse (D) einen Schrägungswinkel (β) einschließt, der zwar zum beschädigungsfreien Ausformen ausreicht, jedoch kleiner als der Neigungswinkel (γ) ist.

5. Verfahren nach einem der Ansprüche 1 bis 4,
**dadurch gekennzeichnet, dass** am Bremssattel-Rohling (10) beim spanlosen Formen
- je eine zur Zylinderachse (A) normale vierte bzw. fünfte Auflagefläche (Q4 bzw. Q5) ausgebildet wird, und
- die erste, zweite und dritte Auflagefläche (Q1, Q2, Q3) so ausgebildet werden, dass sie sich einer Verschiebung des Bremssattel-Rohlings (10) in einer zur Zylinderachse (A) parallelen Richtung beim Einspannen für das spanende Nachbearbeiten nicht widersetzen.

6. Spanlos geformter Bremssattel-Rohling (10) für eine Teilbelag-Scheibenbremse, in welcher der Bremssattel im Anschluss an eine spanende Nachbearbeitung einen Schwimmsattel bildet, mit
- einem Bremskrafterzeuger (12) in Form eines Zylinders, der eine Zylinderachse (A) definiert und einen Zylinderboden (28) aufweist,
- einem dem Bremskrafterzeuger (12) gegenüberliegenden Widerlager (22),
- mindestens einem Paar Führungskörper (14; 42, 44), die auf je einer Seite des Zylinders ausgebildet sind, und an denen sich je eine Führung (16) mit zur Zylinderachse (A) paralleler Führungsachse (A1, A2) ausbilden lässt,
- einer Brücke (18), die den Bremskrafterzeuger (12) mit dem Widerlager (22) verbindet und eine der Zylinderachse (A) zugewandte Innenseite hat,
- und mit am Bremssattel-Rohling (10) ausgebildeten Auflageflächen (Q1, Q2, Q3, Q4, Q5) und Angriffsflächen (S1/2, S3, S4, S5), die ein definiertes Abstützen und Festspannen des Bremssattel-Rohlings (10) für die spanende Nachbearbeitung ermöglichen,
**dadurch gekennzeichnet, dass**
- eine erste und eine zweite Auflagefläche (Q1, Q2) an der Innenseite der Brücke (18) in gleichen Abständen von der Zylinderachse (A), je einer der beiden Führungsachsen (A1, A2) benachbart, nahe dem Widerlager (22) ausgebildet sind, und
- eine dritte Auflagefläche (Q3) in einem von der Brücke (18) abgewandten Randbereich des Zylinderbodens (28) in bezug auf eine Mittelebene (C) zentriert ist, welche die Zylinderachse (A) enthält und sich normal zu einer Führungsebene (B) erstreckt, in der die beiden Führungsachsen (A1, A2) liegen.

7. Bremssattel-Rohling (10) nach Anspruch 6,
**dadurch gekennzeichnet, dass** eine dem Widerlager (22) zugewandte, von ihm mit zunehmender Entfernung von der Brücke (18) divergierende Stirnfläche (30) am Bremskrafterzeuger (12) spanlos ausgebildet ist, die mit einer zur Zylinderachse (A) normalen Ebene (E) einen Winkel (δ) einschließt, welcher größer als der Neigungswinkel (γ) ist.

8. Bremssattel-Rohling (10) nach einem der Ansprüche 6 oder 7,
**dadurch gekennzeichnet, dass**
- er je eine zur Zylinderachse (A) normale vierte bzw. fünfte Auflagefläche (Q4 bzw. Q5) aufweist, und
- die erste, zweite und dritte Auflagefläche (Q1, Q2, Q3) sich parallel zur Zylinderachse (A) erstrecken.

## Claims

1. A method of effecting the non-machining forming of a brake calliper blank (10) for a spot-type disc brake, in which the brake calliper after subsequent machining forms a floating calliper, comprising
- a braking force generator (12) in the form of a cylinder, which defines a cylinder axis (A) and has a cylinder bottom (28),
- an abutment (22) lying opposite the braking force generator (12),
- at least one pair of guide bodies (14; 42, 44), which are formed one on either side of the cylinder, and on each of which a guide (16) having a guide axis (A1, A2) parallel to the cylinder axis (A) is adapted to be formed, and
- a bridge (18), which connects the braking force generator (12) to the abutment (22) and has an inner side facing the cylinder axis (A),
- wherein for the non-machining forming at least two mould parts (34, 36) each partially moulding the brake calliper blank (10) are used, in which as preparation for subsequent machining support surfaces (Q1, Q2, Q3, Q4, Q5) and action surfaces (S1/2, S3, S4, S5) are formed on the brake calliper blank (10),
- wherein the brake calliper blank (10) for the subsequent machining is supportable by its support surfaces (Q1, Q2, Q3, Q4, Q5) in a defined manner and clampable by means of clamping forces acting upon its action surfaces (S1/2, S3, S4, S5),
**characterized in that** during the non-machining forming of the brake calliper blank (10)
- the abutment (22) and the support surfaces (Q1, Q2, Q3, Q4, Q5) of the brake calliper blank (10) are formed in one and the same mould part (34),
- a first and a second support surface (Q1, Q2) are formed on the inner side of the bridge (18) at identical distances from the cylinder axis (A), each adjacent to one of the two guide axes (A1, A2), close to the abutment (22), and
- a third support surface (Q3) is formed in an edge region of the cylinder bottom (28) averted from the bridge (18) in such a way as to be centred in relation to a centre plane (C), which contains the cylinder axis (A) and extends normally to a guide plane (B), in which the two guide axes (A1, A2) lie.

2. The method according to claim 1,
**characterized in that** for the non-machining forming of the brake calliper blank (10)
- two mould parts (34, 36) are used, which may be put together and moved apart along a mould axis (D) and in the put-together state lie against one another in a parting plane (38), of which at least one region adjoining the brake calliper blank (10) together with the mould axis (D) forms an angle of less than 90°, and
- the guide plane (B) and the cylinder axis (A) are inclined at an acute angle of inclination (γ) relative to a plane (H) normal to the mould axis (D).

3. The method according to claim 2,
**characterized in that** during the non-machining forming of the brake calliper blank (10) an end face (30) directed towards the abutment (22) and diverging from the latter with increasing distance from the bridge (18) is formed on the braking force generator (12) and together with a plane (E) normal to the cylinder axis (A) forms an angle (δ), which is greater than the angle of inclination (γ).

4. The method according to claim 2 or 3,
**characterized in that** during the non-machining forming of the brake calliper blank (10) an end face (32) directed towards the braking force generator (12) is formed on the abutment (22) and together with the mould axis (D) forms an angle of skew (β) which, while being sufficient for damage-free removal from the mould, is however smaller than the angle of inclination (γ).

5. The method according to one of claims 1 to 4,
**characterized in that** during the non-machining forming of the brake calliper blank (10)
- a fourth and a fifth support surface (Q4 and Q5) each normal to the cylinder axis (A) are formed, and
- the first, second and third support surfaces (Q1, Q2, Q3) are formed in such a way that they do not oppose a displacement of the brake calliper blank (10) in a direction parallel to the cylinder axis (A) during clamping for the subsequent machining.

6. A brake calliper blank (10) formed without machining for a spot-type disc brake, in which the brake calliper after subsequent machining forms a floating calliper, comprising
- a braking force generator (12) in the form of a cylinder, which defines a cylinder axis (A) and has a cylinder bottom (28),
- an abutment (22) lying opposite the braking force generator (12),
- at least one pair of guide bodies (14; 42, 44), which are formed one on either side of the cylinder, and on each of which a guide (16) having a guide axis (A1, A2) parallel to the cylinder axis (A) is adapted to be formed,
- a bridge (18), which connects the braking force generator (12) to the abutment (22) and has an inner side facing the cylinder axis (A),
- and support surfaces (Q1, Q2, Q3, Q4, Q5) and action surfaces (S1/2, S3, S4, S5) formed on the brake calliper blank (10) which enable a defined supporting and clamping of the brake calliper blank (10) for the subsequent machining,
**characterized in that**
- a first and a second support surface (Q1, Q2) are formed on the inner side of the bridge (18) at identical distances from the cylinder axis (A), each adjacent to one of the two guide axes (A1, A2), close to the abutment (22), and
- a third support surface (Q3) in an edge region of the cylinder bottom (28) averted from the bridge (18) is centred in relation to a centre plane (C), which contains the cylinder axis (A) and extends normally to a guide plane (B), in which the two guide axes (A1, A2) lie.

7. The brake calliper blank (10) according to claim 6,
**characterized in that** an end face (30) directed towards the abutment (22) and diverging from the latter with increasing distance from the bridge (18) is formed without machining on the braking force generator (12) and together with a plane (E) normal to the cylinder axis (A) forms an angle (δ), which is greater than the angle of inclination (γ).

8. The brake calliper blank (10) according to one of claims 6 or 7,
**characterized in that**
- it has a fourth and a fifth support surface (Q4 and Q5, respectively) each normal to the cylinder axis (A), and
- the first, second and third support surfaces (Q1, Q2, Q3) extend parallel to the cylinder axis (A).

## Revendications

1. Procédé destiné à la mise en forme sans enlèvement de copeaux d'une pièce brute d'étrier (10) pour frein à disque à garniture partielle, dans lequel l'étrier forme un étrier flottant après avoir subi une passe de parachèvement par enlèvement de copeaux, comprenant
- un actionneur d'effort de freinage (12) se présentant sous la forme d'un cylindre qui définit un axe de cylindre (A) et présente un fond de cylindre (28),
- une butée (22) située sur le côté opposé de l'actionneur d'effort de freinage (12)
- au moins une paire d'organes de guidage (14; 42, 44) qui sont moulés de chaque côté du cylindre, et qui peuvent être complétés chacun par un guidage (16) à axe de guidage (A1, A2) parallèle à l'axe du cylindre (A), et
- un pont (18) qui relie l'actionneur d'effort de freinage (12) à la butée (22) et possède une face intérieure tournée vers l'axe du cylindre (A),
- au moins deux pièces de forme (34, 36) formant chacune une partie de la pièce brute d'étrier (10) étant utilisées pour la mise en forme sans enlèvement de copeaux, lesquelles pièces de forme formant sur la pièce brute d'étrier (10) des surfaces d'appui (Q1, Q2, Q3, Q4, Q5) et des surfaces d'attaque (S1/2, S3, S4, S5) en vue de la passe de parachèvement par enlèvement de copeaux,
- la pièce brute d'étrier (10) étant conçue, en vue de son parachèvement par enlèvement de copeaux, pour être positionnée en appui de manière définie grâce à ses surfaces d'appui (Q1, Q2, Q3, Q4, Q5) et être fixée par des efforts de serrage intervenant sur ses surfaces d'attaque (S1/2, S3, S4, S5),
**caractérisé en ce que**, lors de la mise en forme sans enlèvement de copeaux de la pièce brute d'étrier (10),
- la butée (22) et les surfaces d'appui (Q1, Q2, Q3, Q4, Q5) de la pièce brute d'étrier (10) sont formées dans la même et seule pièce de forme (34),
- une première et une deuxième surface d'appui (Q1, Q2) sont formées près de la butée (22), sur la face intérieure du pont (18), à distances égales de l'axe du cylindre (A), et avoisinant chacune l'un des deux axes de guidage (A1, A2), et
- une troisième surface d'appui (Q3) est formée dans une zone périphérique du fond du cylindre opposée au pont (18) de manière à être centrée par rapport à un plan médian (C), lequel contient l'axe du cylindre (A) et s'étend perpendiculairement à un plan de guidage (B) dans lequel se trouvent les deux axes de guidage (A1, A2).

2. Procédé selon la revendication 1,
**caractérisé en ce que**, pour la mise en forme sans enlèvement de copeaux de la pièce brute d'étrier (10),
- il est utilisé deux pièces de forme (34, 36) conçues pour être assemblées et désassemblées le long d'un axe du moule (D), et qui, à l'état assemblé, sont en contact le long d'une surface de jonction (38), dont au moins une zone attenante à la pièce brute d'étrier (10) forme avec l'axe du moule (D) un angle de moins de 90°, et
- le plan de guidage (B) ainsi que l'axe du cylindre (A) sont inclinés selon un angle d'inclinaison aigu (γ) vers un plan (H) perpendiculaire à l'axe du moule (D).

3. Procédé selon la revendication 2,
**caractérisé en ce que**, lors de la mise en forme sans enlèvement de copeaux de la pièce brute d'étrier (10), une face d'about (30) tournée vers la butée (22) et divergente du pont (18) à distance grandissante est formée sur l'actionneur d'effort de freinage (12), laquelle face forme avec un plan (E) perpendiculaire à l'axe du cylindre (A) un angle (δ) qui est supérieur à l'angle d'inclinaison (γ).

4. Procédé selon la revendication 2 ou 3,
**caractérisé en ce que**, lors de la mise en forme sans enlèvement de copeaux de la pièce brute d'étrier (10), il est formé sur la butée (22) une face d'about (32) tournée vers l'actionneur d'effort de freinage (12) laquelle forme avec l'axe du moule (D) un angle de biseau (β) qui, quoique suffisant pour permettre le démoulage sans endommagement de la pièce, est toutefois inférieur à l'angle d'inclinaison (γ).

5. Procédé selon l'une des revendications 1 à 4,
**caractérisé en ce que**, lors de la mise en forme sans enlèvement de copeaux de la pièce brute d'étrier (10), il est formé sur cette dernière
- une quatrième et une cinquième surface d'appui (Q4, Q5) perpendiculaire à l'axe du cylindre (A), et
- la première, la deuxième et la troisième surface d'appui (Q1, Q2, Q3) sont formées de telle sorte qu'elles ne s'opposent pas à un décalage de la pièce brute d'étrier (10) dans un sens parallèle à l'axe du cylindre (A) lors de sa fixation en vue de la passe de parachèvement par enlèvement de copeaux.

6. Pièce brute d'étrier (10) pour frein à disque à garniture partielle, dans lequel l'étrier forme un étrier flottant après avoir subi une passe de parachèvement par enlèvement de copeaux, comprenant
- un actionneur d'effort de freinage (12)se présentant sous la forme d'un cylindre qui définit un axe de cylindre (A) et présente un fond de cylindre (28),
- une butée (22) située sur le côté opposé de l'actionneur d'effort de freinage (12)
- au moins une paire d'organes de guidage (14; 42, 44) qui sont moulés de chaque côté du cylindre, et qui peuvent être complétés chacun par un guidage (16) à axe de guidage (A1, A2) parallèle à l'axe du cylindre (A), et
- un pont (18) qui relie l'actionneur d'effort de freinage (12) à la butée (22) et possède une face intérieure tournée vers l'axe du cylindre (A),
- et comprenant des surfaces d'appui (Q1, Q2, Q3, Q4, Q5) et des surfaces d'attaque (S1/2, S3, S4, S5) formées sur la pièce brute d'étrier (10) et permettant son positionnement en appui de manière définie et une fixation de la pièce brute d'étrier (10) en vue de son parachèvement par enlèvement de copeaux,
**caractérisé en ce que**
- une première et une deuxième surface d'appui (Q1, Q2) sont formées près de la butée (22), sur la face intérieure du pont (18), à distances égales de l'axe du cylindre (A), et avoisinant chacune l'un des deux axes de guidage (A1, A2), et
- une troisième surface d'appui (Q3) formée dans une zone périphérique du fond du cylindre opposée au pont (18) est centrée par rapport à un plan médian (C), lequel contient l'axe du cylindre (A) et s'étend perpendiculairement à un plan de guidage (B) dans lequel se trouvent les deux axes de guidage (A1, A2).

7. Pièce brute d'étrier (10) selon la revendication 6,
**caractérisée en ce qu'**une face d'about (30) tournée vers la butée (22) et divergente du pont (18) à distance grandissante est formée sans enlèvement de copeaux sur l'actionneur d'effort de freinage (12), laquelle face forme avec un plan (E) perpendiculaire à l'axe du cylindre (A) un angle (δ) qui est supérieur à l'angle d'inclinaison (γ).

8. Pièce brute d'étrier (10) selon l'une des revendications 6 ou 7,
**caractérisée en ce que**
- elle présente une quatrième et une cinquième surface d'appui (Q4, Q5) perpendiculaire à l'axe du cylindre (A), et
- la première, la deuxième et la troisième surface d'appui (Q1, Q2, Q3) s'étendent parallèlement à l'axe du cylindre (A).
